# EUROPEAN PATENT SPECIFICATION

(11) **EP 4 299 984 B1**
(45) Date of publication and mention of the grant of the patent: **24.09.2025**
(21) Application number: 23182388.1
(22) Date of filing: 29.06.2023
(51) Int. Cl.: F23R 3/14, F23R 3/36, F23R 3/28

(54) **HOLLOW NOZZLE, COMBUSTOR INCLUDING HOLLOW NOZZLE, AND GAS TURBINE INCLUDING COMBUSTOR**
HOHLDÜSE, BRENNKAMMER MIT HOHLDÜSE UND GASTURBINE MIT DER BRENNKAMMER
BUSE CREUSE, CHAMBRE DE COMBUSTION COMPRENANT UNE BUSE CREUSE, ET TURBINE À GAZ COMPRENANT UNE CHAMBRE DE COMBUSTION

(30) Priority: 29.06.2022 KR 20220079727
(43) Date of publication of application: 03.01.2024
(73) Proprietor: Doosan Enerbility Co., Ltd., Seongsan-gu Changwon-si, Gyeongsangnam-do 51711 (KR)
(72) Inventor: GO, Young Gun, 17065 Yongin-si, Gyeonggi-do (KR); JO, Sang Pil, 35218 Daejeon (KR); OH, Kyoung Taek, 18515 Hwaseong-si, Gyeonggi-do (KR)
(74) Representative: BCKIP Part mbB

(56) References cited:
- EP-A1- 2 161 502
- CN-U- 204 438 189
- US-A1- 2008 078 183
- US-A1- 2019 086 090

## Description

### 1. Field of the Invention

The present invention relates to a hollow nozzle, a combustor including the hollow nozzle, and a gas turbine including the combustor and, more particularly, to a hollow nozzle in which compressed air supplied from a compressor is mixed with fuel, an air-fuel mixture is combusted, and the resulting combustion gases are supplied to a turbine, a combustor including the hollow nozzle, and a gas turbine including the combustor.

### 2. Description of the Background Art

In general, a turbomachine refers to an apparatus that generates power for power generation through a fluid (particularly, gas) passing through the turbomachine. Therefore, the turbomachine is usually installed and used together with a generator. Such a turbomachine may include a gas turbine, a steam turbine, a wind power turbine, and the like. The gas turbine is an apparatus that mixes compressed air and natural gas and combusts an air-fuel mixture to generate combustion, which in turn generates power for power generation. The steam turbine is an apparatus that heats water to generate steam, which in turn generates power for power generation. The wind turbine is an apparatus that converts wind power into power for power generation.

Among the turbomachines, the gas turbine includes a compressor, a combustor, and a turbine. The compressor has a plurality of compressor vanes and compressor blades alternately arranged within a compressor casing. In addition, the compressor sucks external air through a compressor inlet scroll strut. The sucked air is compressed by the compressor vanes and the compressor blades while passing through an interior of the compressor. The combustor receives the compressed air from the compressor and mixes the compressed air with fuel to form a fuel-air mixture.

In addition, the combustor ignites the fuel-air mixture with an igniter to generate high-temperature and high-pressure combustion gas. The generated combustion gas is supplied to the turbine. In the turbine, a plurality of turbine vanes and turbine blades are arranged in a turbine casing. The combustion gas generated by the combustor passes through the turbine. While passing through an interior of the turbine, the combustion gas rotates the turbine blades and then is discharged to the outside through a turbine diffuser.

Among the turbomachines, the steam turbine includes an evaporator and a turbine. The evaporator heats water supplied from the outside to generate steam. In the turbine, a plurality of turbine vanes and turbine blades are alternately disposed in a turbine casing, similarly to the turbine in a gas turbine. However, in the turbine in the steam turbine, the steam generated in the evaporator, instead of the combustion gas, passes through the turbine to rotate the turbine blades.

On the other hand, among turbomachines, in the case of a gas turbine, a high temperature flame is generated inside the combustor, so it is necessary to protect a fuel nozzle that injects a mixture of fuel and air into a combustion chamber of the combustor from such a high temperature flame.

When two types of fuels with different flame propagation speeds are used simultaneously in a turbomachine, the flame position is not uniformly guided due to the difference in flame propagation speeds, and noise and vibration are generated during the combustion process due to incomplete combustion.

The foregoing is intended merely to aid in the understanding of the background of the present invention, and is not intended to mean that the present invention falls within the purview of the related art that is already known to those skilled in the art.

EP 2 161 502 A1 discloses a combustor for a gas turbine configured to burn a high caloric fuel and a low caloric fuel. The combustor comprises a premixing tube in which a swirler is arranged. The swirler comprises a plurality of vanes. One of the vanes is comprises first and second fuel injection holes for ejecting the different fuel types. Both fuel injection holes are formed axially spaced on one side surface of the vane.

### SUMMARY OF THE INVENTION

Accordingly, the present invention has been made keeping in mind the above problems occurring in the related art, and an objective of the present invention is to provide a hollow nozzle capable of simultaneously using both a fuel with a relatively high flame propagation speed and a fuel with a relatively low flame propagation speed and supplying the two types of fuels in a uniformly mixed state, a combustor including the hollow nozzle, and a gas turbine including the combustor.

To this end, the present invention provides a hollow nozzle in accordance with claim 1, a combustor in accordance with claim 4, and a gas turbine in accordance with claim 5.

According to an aspect of the present invention, there is provided a hollow nozzle configured to mix compressed air supplied from a compressor of a gas turbine with fuel supplied from a fuel supply and supply a compressed air-fuel mixture into a liner, the hollow nozzle including: a tubular nozzle casing; and a plurality of rotary vanes arranged radially along an inner surface of an inlet of the nozzle casing, through which compressed air is introduced, forming a hollow center at the center of the nozzle casing through which the compressed air flows, each of the rotary vanes including: a first fuel injection hole through which a first type of fuel having a predetermined flame propagation speed is injected toward the hollow center; and a second fuel injection hole through which a second type of fuel having a higher flame propagation speed than the first type of fuel is injected.

The first fuel injection hole is formed on a side facing the center of the nozzle casing of the rotary vane.

The first fuel injection hole may be provided in plural such that a plurality of first injection holes is arranged at regular intervals along a longitudinal direction of the side facing the center of the nozzle casing.

The second fuel injector is formed in a side facing the inlet of the nozzle casing of the rotary vane, wherein the second type of fuel flows along an outer surface of the rotary vane.

The second fuel injection hole may be provided in plural such that a plurality of second injection holes is arranged at regular intervals along a side facing the inlet of the nozzle casing.

According to another aspect of the present invention, there is provided a combustor configured to mix compressed air supplied from a compressor with fuel, combust a mixed fluid, and supply combustion gases to a turbine section, the combustor including: a hollow nozzle configured to receive and mix the compressed air from the compressor and the fuel through a fuel supply to produce the mixed fluid; a liner connected to the hollow nozzle and forming a combustion chamber in which the mixed fluid produced in the hollow nozzle is combusted; and a transition piece connected to the liner to supply the combustion gases produced in the liner to the turbine section, the hollow nozzle including: a tubular nozzle casing; and a plurality of rotary vanes arranged radially along an inner surface of an inlet of the nozzle casing, through which the compressed air is introduced, forming a hollow center at the center of the nozzle casing through which the compressed air flows, each of the rotary vanes including: a first fuel injection hole through which a first type of fuel having a predetermined flame propagation speed is injected toward the hollow center; and a second fuel injection hole through which a second type of fuel having a higher flame propagation speed than the first type of fuel is injected.

According to a further aspect of the present invention, there is provided a gas turbine including: a compressor configured to compress air supplied from the outside; a turbine section configured to generate power for generating electricity as combustion gases internally pass through the turbine section; and a combustor configured to mix the compressed air supplied from the compressor with fuel, combust a mixed fluid, and supply combustion gases to the turbine section, the combustor including: a hollow nozzle configured to receive and mix the compressed air from the compressor and the fuel through a fuel supply to produce the mixed fluid; a liner connected to the hollow nozzle and forming a combustion chamber in which the mixed fluid produced in the hollow nozzle is combusted; and a transition piece connected to the liner to supply the combustion gases produced in the liner to the turbine section, the hollow nozzle including: a tubular nozzle casing; and a plurality of rotary vanes arranged radially along an inner surface of an inlet of the nozzle casing, through which the compressed air is introduced, forming a hollow center at the center of the nozzle casing through which the compressed air flows, each of the rotary vanes including: a first fuel injection hole through which a first type of fuel having a predetermined flame propagation speed is injected toward the hollow center; and a second fuel injection hole through which a second type of fuel having a higher flame propagation speed than the first type of fuel is injected.

The effects produced by the hollow nozzle, the combustor including the hollow nozzle, and the gas turbine including the combustor according to the present invention are as follows.

The present invention has the effect that a fuel with a relatively high flame propagation speed and a fuel with a relatively low flame propagation speed can both be used at the same time, and can be supplied in a uniformly mixed state.

### BRIEF DESCRIPTION OF THE DRAWINGS

The above and other aspects will become more apparent from the following description of the exemplary embodiments with reference to the accompanying drawings, in which:
FIG. 1 is a cross-sectional view illustrating a gas turbine according to the present invention;
FIG. 2 is a schematic view illustrating a combustor illustrated in FIG. 1;
FIG. 3 is an exemplary view illustrating a hollow nozzle inlet of a gas turbine combustor according to an embodiment of the present invention;
FIG. 4 is an illustrative view illustrating a hollow nozzle outlet of a gas turbine combustor according to an embodiment of the present invention;
FIG. 5 is an illustrative view illustrating a flame state according to a hollow nozzle of a gas turbine combustor according to an embodiment of the present invention; and
FIG. 6 is an illustrative view illustrating flows of fuel and compressed air through the hollow nozzle of the gas turbine combustor according to an embodiment of the present invention.

### DETAILED DESCRIPTION OF THE INVENTION

Hereinafter, preferred embodiments according to the present invention will be described in detail with reference to the accompanying drawings.

Accordingly, embodiments described herein and the configurations illustrated in the drawings are only the most preferred embodiments of the present invention.

The present invention is directed to a hollow nozzle, which is capable of simultaneously utilizing two types of fuels with different flame propagation speeds, a combustor including the hollow nozzle, and a gas turbine including the combustor, which will be described with reference to the drawings.

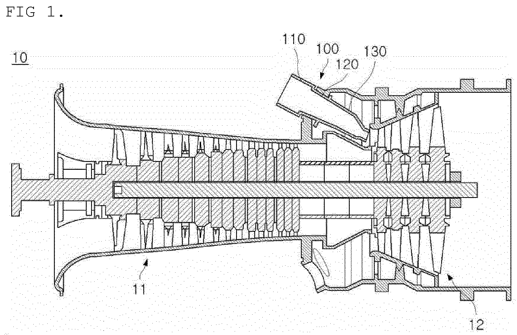

Referring to FIG. 1, a gas turbine 10 includes a compressor 11, a combustor 100, and a turbine section 12. In a flow direction of gas (compressed air or combustion gas), the compressor 11 is disposed on the upstream side of the gas turbine 10, and the turbine section 12 is disposed on the downstream side of the gas turbine. In addition, the combustor 100 is arranged between the compressor 11 and the turbine section 12.

The compressor 11 accommodates, inside a compressor casing, compressor vanes and a compressor rotor including a compressor disk and compressor blades, and the turbine section 12 accommodates, inside a turbine casing, turbine vanes and a turbine rotor including a turbine disk and turbine blades. These compressor vanes and the compressor rotor are arranged in a multi-stage along a flow direction of compressed air, and the turbine vanes and the turbine rotor are also arranged in a multi-stage along a flow direction of combustion gas.

At this time, it is designed such that the compressor 11 has an internal space of which the volume decreases from the front-stage toward the rear-stage so that the intake air can be compressed, whereas the turbine 12 has an internal space of which the volume increases from the front-stage toward the rear-stage so that the combustion gas supplied from the combustor can expand.

On the other hand, between the compressor rotor located on the rear end side of the compressor 11 and the turbine rotor located on the front end side of the turbine section 12, a torque tube is disposed as a torque transmission member to transmit the rotational torque generated by the turbine section 12 to the compressor 11. Although the torque tube may be composed of a plurality of torque tube disks arranged in three stages in total as illustrated in FIG. 1, this is only one of several embodiments of the present invention, so the torque tube may be composed of a plurality of torque tube disks arranged in four or more stages or two or less stages.

The compressor rotor includes a compressor disk and a compressor blade. A plurality of (e.g., 14) compressor disks are provided inside the compressor casing, and the respective compressor disks are fastened so as not to be spaced apart in the axial direction by a tie rod.

More specifically, the respective compressor disks are aligned along the axial direction with the tie rod passing through the central portion thereof, and adjacent compressor disks are arranged such that the opposing surfaces of the adjacent compressor disks are compressed by the tie rod so that the adjacent compressor disks cannot rotate relative to each other.

The plurality of compressor blades is radially coupled to an outer circumferential surface of the compressor disk in a multi-stage. Further, the plurality of compressor vanes is arranged in a multi-stage on an inner circumferential surface of the compressor casing such that each stage of compressor vanes is disposed between adjacent stages of compressor blades. Unlike the compressor disk, the compressor vanes maintain a fixed state so as not to rotate, and serve to guide the compressed air, which passed through an upstream-side stage of compressor blades, to a downstream-side stage of compressor blades. Here, the compressor casing and the compressor vanes may be collectively defined as a compressor stator to distinguish them from the compressor rotor.

The tie rod is arranged to penetrate the center of the plurality of compressor disks and turbine disks, which will be described later, such that one end thereof is fastened in the compressor disk located on the foremost end side of the compressor and the other end thereof is fastened by a fastening nut.

Since the tie rod may be formed in various structures depending on the gas turbine, the shape of the tie rod is not necessarily limited to the shape illustrated in FIG. 1. That is, as illustrated, one tie rod may have a form in which the tie rod passes through the central portion of the compressor disks and the turbine disks, a form in which the plurality of tie rods are arranged in a circumferential manner, or a combination thereof.

Although not illustrated in the drawings, the compressor of the gas turbine may be provided with a deswirler that serves as a guide for increasing a pressure of fluid and adjusting a flow angle of the fluid entering a combustor inlet to a designed flow angle.

The combustor 100 serves to mix an incoming compressed air with fuel and combust the air-fuel mixture to produce high-temperature, high-pressure combustion gas with high energy, thereby raising the temperature of the combustion gas up to the heat-resistant limit of the combustor and turbine parts through an isothermal combustion process.

The plurality of combustors 100 may be arranged in combustor casing having a cell shape to constitute a combustion system of the gas turbine 10, wherein each of the combustors includes a fuel nozzle 110 through which fuel is injected, a liner 120 forming a combustion chamber, a transition piece 130 formed as a connection between the combustor 100 and the turbine section 12.

Specifically, the liner 120 provides a combustion space in which fuel injected through the fuel nozzle 110 and compressed air supplied from the compressor 11 are mixed and burned. The liner 120 includes a combustion chamber that provides the combustion space in which the fuel mixed with air is burned, and an annular flow path that forms an annular space while surrounding the combustion chamber.

In addition, the fuel nozzle 110 is coupled to the front side of the liner 120 and an igniter is coupled to the sidewall of the liner 120.

In the liner annular flow path, compressed air introduced through a plurality of holes provided in an outer wall of the liner 120 flows, and the compressed air that cooled the transition piece 130 to be described later also flows. As such, as the compressed air flows along the outer wall of the liner 120, it is possible to prevent the liner 120 from being thermally damaged by heat generated by the combustion of fuel in the combustion chamber.

The transition piece 130 is connected to the rear side of the liner so that the combustion gas burned by an ignition plug can be transferred to the turbine side. Similar to the liner 120, the transition piece 130 has an annular flow path surrounding an inner space of the transition piece 130 is formed. As the compressed air flows along the annular flow path, the outer wall of the transition piece 130 is cooled to prevent damage due to high temperature of the combustion gas.

Meanwhile, the high-temperature and high-pressure combustion gas from the combustor 100 is supplied to the turbine section 12 described above. The high-temperature and high-pressure combustion gas supplied to the turbine section 12 expands while passing through the inside of the turbine section 12, and accordingly, impulses and reaction forces are applied to the turbine blades, which will be described later, to generate rotational torque. The resultant rotational torque is transmitted to the compressor through the above-described torque tube, and an excess of the power required to drive the compressor is used to drive a generator or the like.

The turbine section 12 is fundamentally similar to the structure of a compressor 11. That is, the turbine section 12 is also provided with a plurality of turbine rotors similar to the compressor rotor of the compressor 11. Thus, the turbine rotor includes a turbine disk and a plurality of turbine blades radially disposed around the turbine disk. The plurality of turbine vanes is also annually arranged, on the basis of the same stage, on the turbine casing between adjacent stages of turbine blades to guide a flow direction of the combustion gas, which passed through the turbine blades. Here, the turbine casing and the turbine vanes may be collectively defined as a turbine stator to distinguish them from the turbine rotor.

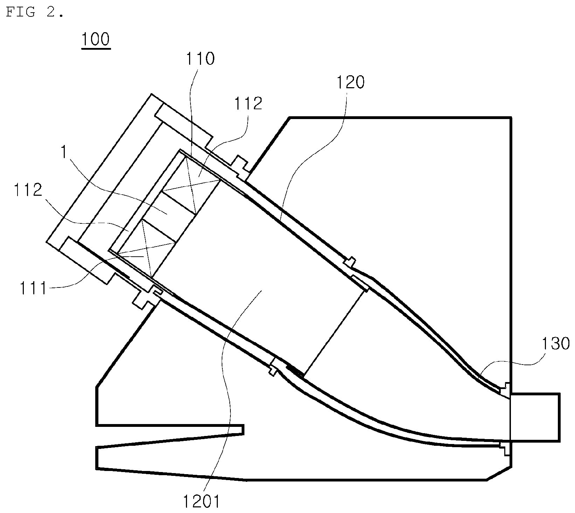

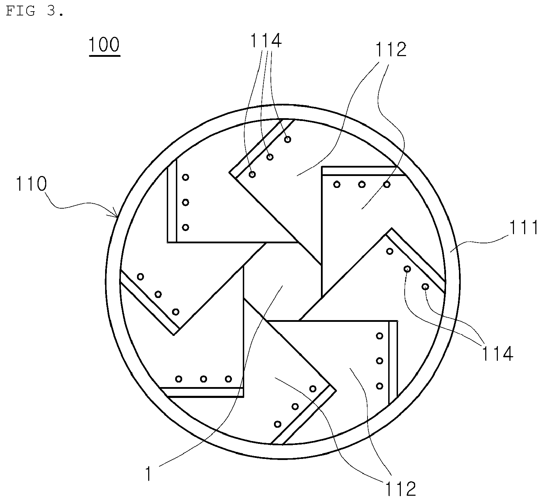

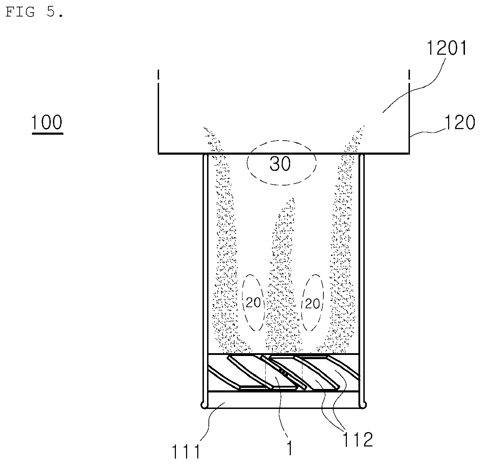

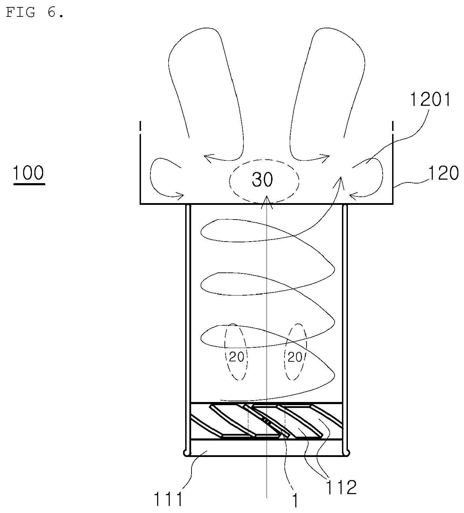

Referring to FIGS. 2 to 6, a gas turbine combustor 100 according to one embodiment of the present invention includes a hollow nozzle 110, a liner 120, and a transition piece 130.

First, the hollow nozzle 110 receives compressed air from the compressor 11 and fuel through a fuel supply (not shown), and produces a mixed fuel (air-fuel mixture).

The liner 120 is connected to the downstream side of the hollow nozzle 110 with respect to a flow direction of compressed air or combustion gases, and internally forms a combustion chamber 1201 in which the mixed fluid (air-fuel mixture) injected from the hollow nozzle 110 is burned.

The transition piece 130 is connected to the downstream side of the liner 120, and supplies combustion gases generated in the combustion chamber of the liner 120 to the turbine section 12.

In addition, the hollow nozzle 110 includes a nozzle casing 111 and a plurality of rotary vanes 112, wherein the nozzle casing 111 is preferably formed from a hollow tube having a corresponding diameter.

The plurality of rotary vanes 112 is arranged radially along an inner surface of an inlet of the nozzle casing 111 through which the compressed air is introduced, forming a hollow center 1 through which the compressed air flows at the center of the nozzle casing 111.

At this time, each of the plurality of rotary vanes 112 is formed to be inclined at a corresponding specified angle as a conventional rotary vane, so that the compressed air passing through the rotary vanes 112 flows while turning.

Thus, a portion of the compressed air introduced through the inlet of the nozzle casing 111 through the hollow center 1 formed in the center of the nozzle casing 111 immediately flows along the longitudinal direction of the nozzle casing 111, and a portion of the compressed air flows while turning along the longitudinal direction of the nozzle casing 111 due to the plurality of rotary vanes 112.

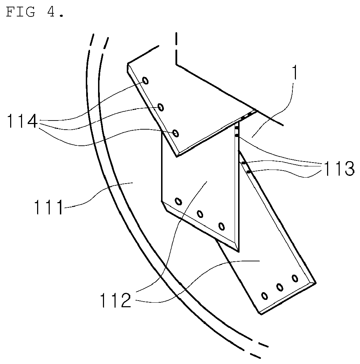

In addition, each of the plurality of rotary vanes 112 has a first fuel injection hole 113 (illustrated in FIG. 4) and a second fuel injection hole 114, wherein the first fuel injection hole 113 is formed on the side facing the center (hollow center: 1) of the nozzle casing 111 in the rotary vanes 112, and ejects a first type of fuel with a relatively low flame propagation speed.

In this case, the first type of fuel is preferably LNG or NG (i.e., liquefied natural gas or natural gas, respectively), and the first fuel injection hole 113 is provided preferably in plural in number such that a plurality of first injection holes is arranged at regular intervals along the longitudinal direction of the side facing the center of the nozzle casing 111.

Thus, when the first type of fuel and compressed air are mixed and burned, a second low-speed flow region 30 is generated at an outlet of the length of the nozzle casing 111 as the compressed air passing through the center (hollow center: 1) of the nozzle casing 111 flows, and a flame position can be fixed in the second low-speed flow region 30.

Furthermore, the second fuel injection hole 114 is formed at an end of the side facing the inlet of the nozzle casing 111 of the rotary vane 112 to eject a second type of fuel having a relatively high flame propagation speed.

In this case, the second fuel is preferably hydrogen, and the second fuel injection hole 114 is provided preferably in plural in number such that a plurality of second fuel injection holes is arranged at regular intervals along the longitudinal direction of the side end facing the inlet of the nozzle casing 111.

Thus, the second type of fuel with a relatively high flame propagation speed ejected through the second fuel injection holes 114, together with the compressed air, flows in the form of a vortex while turning along the inner surface of the nozzle casing 111 along the rotary vanes 112, and is guided from the inlet to the outlet of the nozzle casing 111.

Here, the second type of fuel having a relatively high flame propagation speed generates a first low-speed flow region 20 along the length of the nozzle casing 111, and the flame position can be fixed in the first low-speed flow region 20.

In addition, the first low-speed flow region 20 has a larger distribution than the second low-speed flow region 30 as the fuel flows in the form of a vortex in the first low-speed flow region.

Therefore, the hollow nozzle, the combustor including the hollow nozzle, and the gas turbine including the combustor according to one embodiment of the present invention are capable of simultaneously or selectively using a fuel with a relatively low flame propagation speed and a fuel with a relatively high flame propagation speed, as well as fixing the flame position at a corresponding position depending on the types of fuel, so that the two types of fuel can be stably burned.

Although the present invention has been described with reference to the embodiments illustrated in the drawings, the described embodiments are merely illustrative, so those skilled in the art will understand that various modifications can be made therefrom. Therefore, the true technical scope of the present invention should be determined by the appended claims.

## Claims

1. A hollow nozzle (110) configured to mix compressed air supplied from a compressor (11) of a gas turbine (10) with fuel supplied from a fuel supply and supply a compressed air-fuel mixture into a liner (120), the hollow nozzle (110) being capable of simultaneously utilizing two types of fuels with different flame propagation speeds, the hollow nozzle (110) comprising:
a tubular nozzle casing (111) comprising an inlet through which compressed air is introduced; and
a plurality of rotary vanes (112) arranged radially along an inner surface of the inlet of the nozzle casing (111), wherein the rotary vanes (112) form a hollow center (1) at the center of the nozzle casing (111) to allow a portion of the compressed air introduced through the hollow center (111) to flow along the longitudinal direction of the nozzle casing (111), and wherein each of the plurality of rotary vanes (112) is formed to be inclined at a specified angle so that the compressed air passing through the rotary vanes (112) flows while turning, each of the rotary vanes (112) comprising:
a first fuel injection hole (113) for injecting a first type of fuel having a predetermined flame propagation speed toward the hollow center (1), wherein the first fuel injection hole (113) is provided on a side of the rotary vane (112) facing the center of the nozzle casing (111); and
a second fuel injection hole (114) for injecting a second type of fuel having a higher flame propagation speed than the first type of fuel, wherein the second fuel injection hole (114) is provided in a side of the rotary vane (112) facing the inlet of the nozzle casing (111), so that the second type of fuel is allowed to flow along an outer surface of the rotary vane (112).

2. The hollow nozzle (110) according to preceding claim 1, wherein the first fuel injection hole (113) is provided in plural such that a plurality of first injection holes is arranged at regular intervals along a longitudinal direction of the side of the rotary vane (112) facing the center of the nozzle casing (111).

3. The hollow nozzle (110) according to claim 1 or 2, wherein the second fuel injection hole (114) is provided in plural such that a plurality of second injection holes is arranged at regular intervals along the side of the rotary vane (112) facing the inlet of the nozzle casing (111).

4. A combustor (100) configured to mix compressed air supplied from a compressor (11) with fuel, combust a mixed fluid, and supply combustion gases to a turbine section (12), the combustor (100) comprising:
a hollow nozzle (110) according to any one of the preceding claims, the hollow nozzle (110) being configured to receive and mix the compressed air from the compressor (11) and the fuel through a fuel supply to produce the mixed fluid;
a liner (120) connected to the hollow nozzle (110) and forming a combustion chamber (1201) in which the mixed fluid produced in the hollow nozzle (110) is combusted; and
a transition piece (130) connected to the liner (120) to supply the combustion gases produced in the liner (120) to the turbine section (12).

5. A gas turbine (10) comprising:
a compressor (11) configured to compress air supplied from the outside;
a turbine section (12) configured to generate power for generating electricity as combustion gases internally pass through the turbine section; and
a combustor (100) according to claim 4, the combustor (100) being configured to mix the compressed air supplied from the compressor with fuel, combust a mixed fluid, and supply combustion gases to the turbine section (12).

## Patentansprüche

1. Hohldüse (110), die so konfiguriert ist, dass sie Druckluft, die von einem Kompressor (11) einer Gasturbine (10) zugeführt wird, mit Brennstoff, der von einer Brennstoffzufuhr zugeführt wird, vermischt und ein Druckluft-Brennstoff-Gemisch in eine Auskleidung (120) zuführt, wobei die Hohldüse (110) in der Lage ist, gleichzeitig zwei Arten von Brennstoffen mit unterschiedlichen Flammenausbreitungsgeschwindigkeiten zu verwenden, wobei die Hohldüse (110) umfasst:
ein rohrförmiges Düsengehäuse (111), das einen Einlass umfasst, durch den Druckluft eingeführt wird; und
eine Mehrzahl von Drehschaufeln (112), die radial entlang einer Innenfläche des Einlasses des Düsengehäuses (111) angeordnet sind, wobei die Drehschaufeln (112) ein hohles Zentrum (1) im Zentrum des Düsengehäuses (111) ausbilden, damit ein Teil der durch das hohle Zentrum (111) eingeführten Druckluft entlang der Längsrichtung des Düsengehäuses (111) strömen kann, und wobei jede der Mehrzahl von Drehschaufeln (112) so ausgebildet ist, dass sie in einem bestimmten Winkel geneigt ist, so dass die durch die Drehschaufeln (112) hindurchströmende Druckluft sich drehend strömt, wobei jede der Drehschaufeln (112) umfasst:
ein erstes Brennstoffeinspritzloch (113) zum Einspritzen eines ersten Brennstofftyps mit einer vorbestimmten Flammenausbreitungsgeschwindigkeit in Richtung des hohlen Zentrums (1),
wobei das erste Brennstoffeinspritzloch (113) auf einer Seite der Drehschaufel (112) vorgesehen ist, die dem Zentrum des Düsengehäuses (111) zugewandt ist; und
ein zweites Brennstoffeinspritzloch (114) zum Einspritzen eines zweiten Brennstofftyps mit einer höheren Flammenausbreitungsgeschwindigkeit als der erste Brennstofftyp, wobei das zweite Brennstoffeinspritzloch (114) in einer Seite der Drehschaufel (112) vorgesehen ist, die dem Einlass des Düsengehäuses (111) zugewandt ist, so dass der zweite Brennstofftyp entlang einer Außenfläche der Drehschaufel (112) strömen kann.

2. Hohldüse (110) nach dem vorhergehenden Anspruch 1, wobei das erste Brennstoffeinspritzloch (113) mehrfach vorgesehen ist, so dass eine Mehrzahl von ersten Einspritzlöchern in regelmäßigen Abständen entlang einer Längsrichtung der Seite der Drehschaufel (112) angeordnet ist, die dem Zentrum des Düsengehäuses (111) zugewandt ist.

3. Hohldüse (110) nach Anspruch 1 oder 2, wobei das zweite Brennstoffeinspritzloch (114) mehrfach vorgesehen ist, so dass eine Mehrzahl von zweiten Einspritzlöchern in regelmäßigen Abständen entlang der Seite der Drehschaufel (112) angeordnet ist, die dem Einlass des Düsengehäuses (111) zugewandt ist.

4. Brennkammer (100), die so konfiguriert ist, dass sie von einem Kompressor (11) zugeführte Druckluft mit Brennstoff vermischt, ein vermischtes Fluid verbrennt und Verbrennungsgase einem Turbinenabschnitt (12) zuführt, wobei die Brennkammer (100) umfasst:
eine Hohldüse (110) nach einem der vorhergehenden Ansprüche, wobei die Hohldüse (110) so konfiguriert ist, dass sie die Druckluft von dem Kompressor (11) und den Brennstoff durch eine Brennstoffzufuhr empfängt und vermischt, um das vermischte Fluid zu produzieren;
eine Auskleidung (120), die mit der Hohldüse (110) verbunden ist und eine Verbrennungskammer (1201) ausbildet, in der das in der Hohldüse (110) produzierte vermischte Fluid verbrannt wird; und
ein Übergangsstück (130), das mit der Auskleidung (120) verbunden ist, um die in der Auskleidung (120) produzierten Verbrennungsgase dem Turbinenabschnitt (12) zuzuführen.

5. Gasturbine (10), umfassend:
einen Kompressor (11), der so konfiguriert ist, dass er von außen zugeführte Luft komprimiert;
einen Turbinenabschnitt (12), der so konfiguriert ist, dass er Energie zur Erzeugung von Elektrizität erzeugt, wenn Verbrennungsgase intern durch den Turbinenabschnitt hindurchströmen; und
eine Brennkammer (100) nach Anspruch 4, wobei die Brennkammer (100) so konfiguriert ist, dass sie die von dem Kompressor zugeführte Druckluft mit Brennstoff vermischt, ein vermischtes Fluid verbrennt und Verbrennungsgase dem Turbinenabschnitt (12) zuführt.

## Revendications

1. Buse creuse (110), prévue pour mélanger de l'air comprimé refoulé par un compresseur (11) d'une turbine à gaz (10) avec du carburant refoulé par une alimentation en carburant, et refouler un mélange air-carburant comprimé dans une chemise (120), ladite buse creuse (110) étant apte à utiliser simultanément deux types de carburants avec des vitesses de propagation de flamme différentes, ladite buse creuse (110) comprenant :
un carter de buse tubulaire (111) présentant une entrée par laquelle l'air comprimé est introduit ; et
une pluralité d'aubes rotatives (112) disposées radialement le long d'une surface intérieure de l'entrée du carter de buse (111), lesdites aubes rotatives (112) formant un centre creux (1) au centre du carter de buse (111) permettant à une partie de l'air comprimé introduit par le centre creux (111) de s'écouler dans le sens de la longueur du carter de buse (111), et où chaque aube de la pluralité d'aubes rotatives (112) est formée de manière inclinée suivant un angle spécifié de sorte que l'air comprimé passant au travers des aubes rotatives (112) circule en tournant, chacune des aubes rotatives (112) comprenant :
un premier trou d'injection de carburant (113) pour injecter un premier type de carburant ayant une vitesse de propagation de flamme prédéterminée vers le centre creux (1), ledit premier trou d'injection de carburant (113) étant prévu sur un côté de l'aube rotative (112) faisant face au centre du carter de buse (111) ; et
un deuxième trou d'injection de carburant (114) pour injecter un deuxième type de carburant ayant une vitesse de propagation de flamme supérieure à celle du premier type de carburant, ledit deuxième orifice d'injection de carburant (114) étant disposé sur un côté de l'aube rotative (112) faisant face à l'entrée du carter de buse (111), de sorte que le deuxième type de carburant est admis à s'écouler le long d'une surface extérieure de l'aube rotative (112).

2. Buse creuse (110) selon la revendication 1, où le premier trou d'injection de carburant (113) est prévu en pluralité, de sorte qu'une pluralité de premiers trous d'injection est présentée avec des intervalles réguliers dans le sens de la longueur du côté de l'aube rotative (112) faisant face au centre du carter de buse (111).

3. Buse creuse (110) selon la revendication 1 ou la revendication 2, où le deuxième trou d'injection de carburant (114) est prévu en pluralité, de sorte qu'une pluralité de deuxièmes trous d'injection est présentée avec des intervalles réguliers le long du côté de l'aube rotative (112) faisant face à l'entrée du carter de buse (111).

4. Chambre de combustion (100), prévue pour mélanger de l'air comprimé refoulé par un compresseur (11) avec du carburant, brûler un fluide mélangé et refouler des gaz de combustion vers une section de turbine (12), ladite chambre de combustion (100) comprenant :
une buse creuse (110) selon l'une des revendications précédentes, ladite buse creuse (110) étant prévue pour recevoir et mélanger l'air comprimé provenant du compresseur (11) et le carburant d'une alimentation en carburant afin de produire le fluide mélangé ;
une chemise (120) reliée à la buse creuse (110) et formant une chambre de combustion (1201) où le fluide mélangé produit dans la buse creuse (110) est brûlé ; et
une pièce de transition (130) raccordée à la chemise (120) pour refouler les gaz de combustion produits dans la chemise (120) vers la section de turbine (12).

5. Turbine à gaz (10), comprenant :
un compresseur (11) prévu pour comprimer l'air fourni de l'extérieur ;
une section de turbine (12) prévue pour générer de l'énergie afin de produire de l'électricité à mesure que des gaz de combustion traversent l'intérieur de la section de turbine ; et
une chambre de combustion (100) selon la revendication 4, ladite chambre de combustion (100) étant prévue pour mélanger l'air comprimé refoulé par le compresseur avec du carburant, brûler un fluide mélangé et refouler des gaz de combustion vers la section de turbine (12).
